# EUROPEAN PATENT APPLICATION

(11) **EP 3 013 033 A1**
(43) Date of publication of application: **27.04.2016**
(21) Application number: 15182614.6
(22) Date of filing: 27.08.2015
(51) Int. Cl.: H04N 5/232

(54) **IMAGE CAPTURE CONTROL METHOD AND SYSTEM THEREOF**

(30) Priority: 23.10.2014 CN 201410571904
(71) Applicant: Xiaomi Inc., Beijing 100085 (CN)
(72) Inventor: CHEN, Zhijun, 100085 BEIJING (CN); ZHANG, Tao, 100085 BEIJING (CN); YANG, Song, 100085 BEIJING (CN)
(74) Representative: Fontenelle, Sandrine

(57) **Abstract**

The shooting control method comprises steps that: a smart terminal detects (110) whether it is in a shooting status, and triggers (120) a smart wearable device for detection of a user action when it detects itself in a shooting status. The smart wearable device sends its own motion curve collected to the smart terminal. Afterwards, the smart terminal triggers (150) a camera app to take photos if it detects that the motion curve is a preset motion curve. It can be known from what is mentioned above that the shooting control method may automatically trigger the smart terminal to take photos by detecting a user action (gesture) with the smart wearable device so that the smart terminal may take photos by remote control, without users manually triggering the shooting button of the smart terminal in the shooting process, simple in operation and convenient for use.

## Description

### TECHNICAL FIELD

The present invention relates to the field of smart terminal and smart wearable device technology, and more particularly, to a shooting control method and a device thereof.

### BACKGROUND

With rapid development in photography technology of smart terminals, a growing number of people are using a smart terminal to take photos.

When a user is using a smart terminal for self-shooting, the user needs to take the smart terminal with one hand and press the shooting button with the other hand, which is cumbersome in operation. For another example, when a user is using a smart terminal with a large screen and weight (such as a tablet computer) to take photos, the user needs to hold the smart terminal with both hands, thus being unable to press the shooting button, quite inconvenient for shooting.

### SUMMARY

In order to overcome problems in related technologies, the present invention provides a shooting control method and a device thereof. The technical solution is as below:

According to a first aspect of the embodiments of the present invention, there is provided a shooting control method for use in a smart terminal, comprising:
detecting whether the smart terminal is in a shooting status;
sending an action collecting instruction to a smart wearable device in case of detecting that the smart terminal is in a shooting status, the action collecting instruction being configured to enable the smart wearable device to collect its own motion curve;
receiving the motion curve collected by the smart wearable device and judging whether the motion curve is a preset motion curve; and
triggering the smart terminal to take photos if the motion curve is a preset motion curve.

In combination with the first aspect, in a first embodiment, the method further comprises:
monitoring whether a next motion curve sent from the smart wearable device is received if the motion curve is not a preset motion curve; and
returning to execute the step of judging whether the motion curve is a preset motion curve if the next motion curve sent from the smart wearable device is received.

In combination with the first aspect, in a second embodiment, the method further comprises:
sending a first instruction to the smart wearable device if the motion curve is a preset motion curve, the first instruction being configured to enable the smart wearable device to prompt the operator that the current shooting is triggered successfully.

In combination with the first aspect, in a third embodiment, the method further comprises:
sending a stop detection instruction to the smart wearable device when the smart terminal is switched from a shooting status to a non-shooting status upon detection, the stop detection instruction being configured to enable the smart wearable device to stop sending the motion curve in real time.

In combination with the first aspect, in a fourth embodiment, the step of triggering the smart terminal to take photos if the motion curve is a preset motion curve comprises:
triggering the smart terminal to take a single photo when one motion curve of the smart wearable device received within a first preset time length is the preset motion curve, and triggering the smart terminal to take continuous photos when at least two motion curves of the smart wearable device received within a first preset time length are the preset motion curves;
or,
in case that the preset motion curve comprises a first preset motion curve and a second preset motion curve, triggering the smart terminal to take a single photo when the motion curve is the first preset motion curve, and triggering the smart terminal to take continuous photos when the motion curve is the second preset motion curve.

In combination with the first aspect, in a fifth embodiment, the method further comprises:
receiving an operation of setting a preset motion curve by an operator, and generating an action setting instruction according to the operation;
sending the action setting instruction to the smart wearable device so that the smart wearable device collects the current motion curve of its own; and
receiving the current motion curve collected by the smart wearable device and setting the current motion curve as the preset motion curve, the preset motion curve being configured to trigger the smart terminal to take photos.

According to a second aspect of the embodiments of the present invention, there is provided a shooting control method for use in a smart wearable device, comprising:
receiving an action collecting instruction sent from a smart terminal, the action collecting instruction being generated by the smart terminal when the smart terminal detects itself in a shooting status; and
collecting a motion curve of the smart wearable device itself according to the action collecting instruction and sending the motion curve collected to the smart terminal so as to trigger the smart terminal to take photos if the smart terminal judges that the motion curve is a preset motion curve.

In combination with the second aspect, in a first embodiment, the method further comprises:
receiving a stop detection instruction sent from the smart terminal and stopping sending a motion curve of the smart wearable device itself in real time according to the stop detection instruction, wherein, the stop detection instruction being generated when the smart terminal is switched from a shooting status to a non-shooting status upon detection;
or,
stopping sending a motion curve of the smart wearable device itself in real time if the stop detection instruction sent from the smart terminal is not received within a second preset time length after receiving the action collecting instruction.

In combination with the second aspect, in a second embodiment, the method further comprises:
receiving a first instruction sent from the smart terminal and prompting the operator that the current shooting is successfully triggered on the basis of the first instruction generated when the smart terminal detects that the motion curve is a preset motion curve.

In combination with the second aspect, in a third embodiment, the method further comprises:
receiving an action setting instruction sent from the smart terminal, the action setting instruction being generated by the smart terminal when the smart terminal detects such an operation of setting action by an operator; and
detecting the current motion curve of the smart wearable device itself according to the action setting instruction and sending the current motion curve to the smart terminal so that the smart terminal sets the current motion curve as a preset motion curve.

According to a third aspect of the embodiments of the present invention, there is provided a shooting control device, comprising:
a first detection module, configured to detect whether a smart terminal is in a shooting status;
a first sending module, configured to send an action collecting instruction to a smart wearable device in case of detecting that the smart terminal is in a shooting status, the action collecting instruction being configured to enable the smart wearable device to collect its own motion curve;
a first receiving module, configured to receive a motion curve collected by the smart wearable device;
a first judgment module, configured to judge whether the motion curve is a preset motion curve; and
a trigger module, configured to trigger the smart terminal to take photos if the motion curve is a preset motion curve.

In combination with the third aspect, in a first embodiment, the device further comprises:
a second judgment module, configured to monitor whether a next motion curve sent from the smart wearable device is received if the motion curve is not a preset motion curve, and to enable the first judgment module to judge whether the next motion curve is a preset motion curve if the next motion curve sent from the smart wearable device is received.

In combination with the third aspect, in a second embodiment, the device further comprises:
a second sending module, configured to send a first instruction to the smart wearable device if the motion curve is a preset motion curve, the first instruction being configured to enable the smart wearable device to prompt the operator that the current shooting is triggered successfully.

In combination with the third aspect, in a third embodiment, the device further comprises:
a second detection module, configured to detect whether the smart terminal is switched from a shooting status to a non-shooting status; and
a third sending module, configured to send a stop detection instruction to the smart wearable device when the smart terminal is switched from a shooting status to a non-shooting status upon detection, the stop detection instruction being configured to enable the smart wearable device to stop sending the motion curve in real time.

In combination with the third aspect, in a fourth embodiment, the trigger module comprises: a first trigger submodule and a second trigger submodule;
the first trigger submodule is configured to trigger the smart terminal to take a single photo when one motion curve of the smart wearable device received within a first preset time length is the preset motion curve; and the second trigger submodule is configured to trigger the smart terminal to take continuous photos when at least two motion curves of the smart wearable device received within a first preset time length are the preset motion curves; or
in case that the preset motion curve includes a first preset motion curve and a second preset motion curve, the trigger module comprises: a third trigger submodule and a fourth trigger submodule;
the third trigger submodule is configured to trigger the smart terminal to take a single photo when the motion curve is the first preset motion curve, and the fourth trigger submodule is configured to trigger the smart terminal to take continuous photos when the motion curve is the second preset motion curve.

In combination with the third aspect, in a fifth embodiment, the device further comprises:
a setting instruction generation module, configured to receive such an operation of setting a preset motion curve by an operator, and to generate an action setting instruction according to the operation;
a fourth sending module, configured to send the action setting instruction to the smart wearable device so that the smart wearable device detects the current motion curve of its own; and
a second receiving module, configured to receive the current motion curve sent from the smart wearable device and to set the current motion curve as the preset motion curve.

According to a fourth aspect of the embodiments of the present invention, there is provided a shooting control device for use in a smart wearable device, comprising:
a first receiving module, configured to receive an action collecting instruction sent from a smart terminal, the action collecting instruction is generated by the smart terminal when the smart terminal detects itself in a shooting status;
a first collecting module, configured to collect a motion curve of the smart wearable device itself according to the action collecting instruction; and
a first sending module, configured to send the motion curve to the smart terminal so as to trigger the smart terminal to take photos if the smart terminal judges that the motion curve is a preset motion curve.

In combination with the fourth aspect, in a first embodiment, the device further comprises:
a second receiving module, configured to receive a stop detection instruction sent from the smart terminal;
a first termination module, configured to stop sending a motion curve of the smart wearable device itself in real time according to the stop detection instruction, wherein, the stop detection instruction is generated by the smart terminal when the smart terminal detects itself switched from a shooting status to a non-shooting status;
or,
a second termination module, configured to stop sending a motion curve of the smart wearable device itself in real time if the stop detection instruction sent from the smart terminal is not received within a second preset time length after receiving the action collecting instruction.

In combination with the fourth aspect, in a second embodiment, the device further comprises:
a third receiving module, configured to receive a first instruction sent from the smart terminal, the first instruction is generated by the smart terminal when the smart terminal detects that the motion curve is a preset motion curve; and
a prompting module, configured to prompt the operator that a current shooting is triggered successfully on the basis of the first instruction.

In combination with the fourth aspect, in a third embodiment, the device further comprises:
a fourth receiving module, configured to receive an action setting instruction sent from the smart terminal, the action setting instruction is generated by the smart terminal when the smart terminal detects such an operation of setting action by an operator; and
a second detection module, configured to detect a current motion curve of the smart wearable device itself according to the action setting instruction and to send the current motion curve to the smart terminal so that the smart terminal sets the current motion curve as a preset motion curve.

According to a fifth aspect of the embodiments of the present invention, there is provided a smart terminal, comprising: a processor; and a memory for storing instructions executable by the processor; wherein, the processor is configured to:
detect whether the smart terminal is in a shooting status;
send an action collecting instruction to a smart wearable device in case of detecting that the smart terminal is in a shooting status, the action collecting instruction enables the smart wearable device to collect its own motion curve;
receive the motion curve collected by the smart wearable device and judge whether the motion curve is a preset motion curve; and
trigger the smart terminal to take photos if the motion curve is a preset motion curve.

According to a sixth aspect of the embodiments of the present invention, there is provided a smart wearable device, comprising: a processor; and a memory for storing instructions executable by the processor; wherein, the processor is configured to:
receive an action collecting instruction sent from a smart terminal, the action collecting instruction is generated by the smart terminal when the smart terminal detects itself in a shooting status; and
collect a motion curve of the smart wearable device itself according to the action collecting instruction and send the motion curve collected to the smart terminal so as to trigger the smart terminal to take photos if the smart terminal judges that the motion curve is a preset motion curve.

In another aspect, there is provided a computer program product stored on a computer usable medium, comprising computer-readable program means (e.g. instructions) for causing a smart terminal to implement the method according to the above first aspect and a computer program product stored on a computer usable medium, comprising computer-readable program means (e.g. instructions) for causing a smart wearable device to implement the method according to the second aspect.

The technical solution provided by the embodiments of the present invention may include following beneficial effects: the shooting control method may trigger the smart terminal to take photos by means of the smart wearable device. The smart terminal triggers the smart wearable device to collect its own motion curve in case of detecting itself in a shooting status. The smart wearable device sends the motion curve collected to the smart terminal. Afterwards, the smart terminal is triggered to take photos if it detects that the motion curve is a preset motion curve. It can be known from what is mentioned above that the shooting control method may automatically trigger the smart terminal to take photos by detecting user action with the smart wearable device so that the smart terminal may take photos by remote control, without users manually triggering the shooting button of the smart terminal in the shooting process, simple in operation and convenient for use.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a shooting control method according to an exemplary embodiment.
Fig. 2 is a flow chart of another shooting control method according to an exemplary embodiment.
Fig. 3 is a flow chart of a further shooting control method according to an exemplary embodiment.
Fig. 4 is a flow chart of a shooting control method according to an exemplary embodiment.
Fig. 5 is a flow chart of another shooting control method according to an exemplary embodiment.
Fig. 6 is a flow chart of a further shooting control method according to an exemplary embodiment.
Fig. 7 is a flow chart of a shooting control method according to an exemplary embodiment.
Fig. 8 is a block diagram of a shooting control device according to an exemplary embodiment.
Fig. 9 is a block diagram of another shooting control device according to an exemplary embodiment.
Fig. 10 is a block diagram of a further shooting control device according to an exemplary embodiment.
Fig. 11 is a block diagram of another shooting control device according to an exemplary embodiment.
Fig. 12 is a block diagram of a further shooting control device according to an exemplary embodiment.
Fig. 13 is a block diagram of a shooting control device according to an exemplary embodiment.
Fig. 14 is a block diagram of another shooting control device according to an exemplary embodiment.
Fig. 15 is a block diagram of a further shooting control device according to an exemplary embodiment.
Fig. 16 is a block diagram of a still further shooting control device according to an exemplary embodiment.
Fig. 17 is a block diagram of a device used for a shooting control method according to an exemplary embodiment.

Specific embodiments of the present invention are shown by the above drawings, and more detailed description will be made hereinafter. These drawings are not for limiting the scope of conceiving the present invention in any way, but for illustrating the concept of the present invention for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

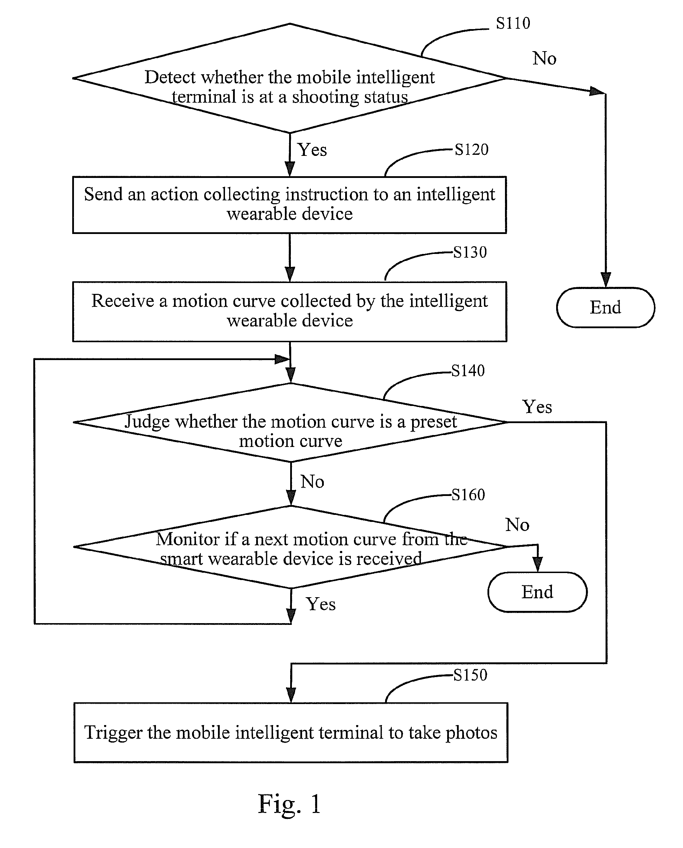

Fig. 1 is a flow chart of a shooting control method according to an exemplary embodiment. The method is applied by a smart terminal, such as a smart mobile terminal (or a mobile intelligent terminal) which may be a smart mobile phone or a tablet computer and the like. The embodiments of the present invention are illustrated by taking a smart mobile phone as an example. As shown in Fig. 1, the method includes the following steps performed by the smart terminal:

In Step S110, it is detected whether the smart terminal is in a shooting status. It proceeds to Step S120 if it is in a shooting status. Otherwise, the process is terminated if it is in a non-shooting status.

In an exemplary embodiment of the present invention, the smart terminal may judge weather a camera app is invoked, and determine itself in a shooting status by judging that the camera app is invoked, or determine itself in a non-shooting status by judging that the camera app is not invoked.

In another exemplary embodiment of the present invention, the smart terminal may judge whether a display screen is invoked by a camera app, and determine itself in a shooting status by judging that a display screen is invoked by the camera app, or determine itself in a non-shooting status by judging that a display screen is not invoked by the camera app.

In Step S120, after detecting that the smart terminal is in a shooting status, an action collecting instruction is sent to a smart wearable device (or an intelligent wearable device). The action collecting instruction is configured to enable the smart wearable device to collect its own motion curve.

After receiving the action collecting instruction, the smart wearable device begins detecting its own motion curve which reflects the action of an operator wearing the smart wearable device.

The smart wearable device may be a smart wristband, a pair of smart glasses or a smart watch and the like. The embodiments of the present invention are illustrated by taking a smart wristband as an example.

Once the motion curve is collected, the smart wearable device immediately sends it to the smart terminal.

In Step S130, the motion curve collected by the smart wearable device is received by the smart terminal.

In Step S140, it is judged whether the motion curve is a preset motion curve. It proceeds to Step S150 if the motion curve is a preset motion curve. Otherwise, it proceeds to Step S160.

In this step S140, the smart terminal judges whether the motion curve is the preset motion curve which may be set by means of the smart wearable device, wherein, the setting process may include following steps:

Step 1) such an operation of setting a preset motion curve by the operator is received, and an action setting instruction is generated according to the operation.

Step 2) the action setting instruction is sent to the smart wearable device so that the smart wearable device collects the current motion curve of its own.

Step 3) the current motion curve collected by the smart wearable device is received and set as the preset motion curve.

For example, a user triggers the smart mobile phone's function of setting a preset motion curve to generate a corresponding action setting instruction and send the action setting instruction to the smart wristband; on the basis of the action setting instruction, the smart wristband collects the current motion curve of its own and sends the current motion curve to the smart mobile phone, which stores the current motion curve and sets the current motion curve as the preset motion curve. The process of setting the preset motion curve is similar to that of setting a passcode. The user may accomplish the current motion curve one more time, and if the two motion curves are same, the motion curve is set as the preset motion curve.

In Step S150, the smart terminal is triggered to take photos.

In an exemplary embodiment of the present invention, if the smart terminal detects that a motion curve sent from the smart wearable device is the preset motion curve, the smart terminal triggers its camera app to take photos.

In another exemplary embodiment of the present invention, the camera app of the smart terminal is triggered to take continuous photos if each of at least two motion curves of the smart wearable device received within a first preset time length is the preset motion curve. The first preset time length may be set freely according to the practical application, for example, 1min. In this scene, the user may set the camera's Burst Mode (or Continuous Capture Mode) as being enabled by receiving preset motion curve for many times, and set the number of times of the preset motion curve, for example, at least twice. Concretely, the user may set to start the Burst Mode of the camera app when the number of times of the preset motion curve detected within 1min is twice.

In another exemplary embodiment of the present invention, the preset motion curve comprises a first preset motion curve and a second preset motion curve. The first preset motion curve is configured to trigger the smart terminal to take a single photo, while the second preset motion curve is configured to trigger the smart terminal to take continuous photos.

In Step S160, it is monitored whether a next motion curve sent from the smart wearable device is received. If yes, it is returned to execute Step S140 until it is judged that the motion curve is a preset motion curve. Otherwise, the process is terminated.

The shooting control method provided in the present embodiment, triggers the smart wearable device to detect a user action when the smart terminal detects itself in a shooting status. The smart wearable device sends its own motion curve collected to the smart terminal. Afterwards, the smart terminal triggers a camera app to take photos if it detects that the motion curve is a preset motion curve. It can be known from what is mentioned above that the shooting control method may automatically trigger the smart terminal to take photos by detecting a user action by the smart wearable device so that the smart terminal may take photos by remote control, without users manually triggering the shooting button of the smart terminal in the shooting process, simple in operation and convenient for use.

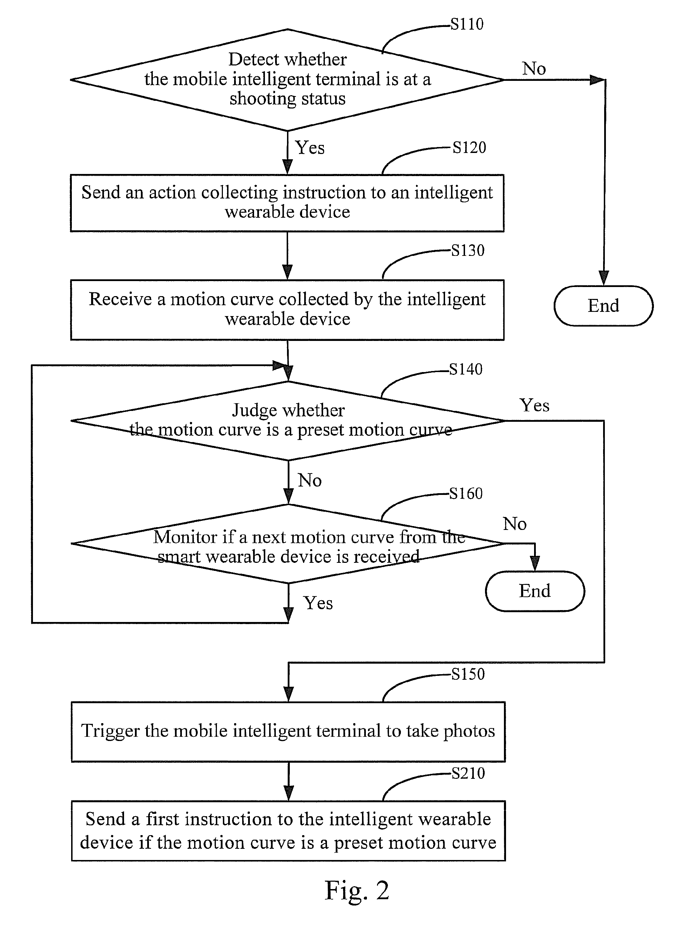

Fig. 2 is a flow chart of another shooting control method according to an exemplary embodiment. The method is applied to the smart terminal, as shown in Fig. 2, on the basis of the embodiment as shown in Fig. 1; the method may further include Step S210.

In Step S210, a first instruction is sent to the smart wearable device if the motion curve is a preset motion curve. The first instruction enables the smart wearable device to prompt the operator that the current shooting is triggered successfully. Namely, if the motion curve is a preset motion curve, a prompt message is sent to a user by means of the smart wearable device. The prompt message may be a vibration or a ring, etc.

For example, the smart wristband vibrates after receiving the first instruction from the smart mobile phone. Perceiving the vibration of the smart wristband, the user learns that the smart mobile phone is successfully triggered by using the preset motion curve to take photos.

It should be explained that the present invention does not strictly limit the execution sequence of Step S210 and Step S150. In other words, Step S210 may be executed before Step S150, or Step S150 may be executed before Step S210, or Step S210 and S150 may be executed simultaneously.

In the shooting control method provided in the present embodiment, after the smart terminal judges that the motion curve sent from the smart wearable device is the preset motion curve, the smart wearable device sends the user a prompt message indicating shooting successfully triggered. In this way, after receiving the prompt message, the user immediately knows that the action made just now has been recognized by the smart terminal thus triggering to take photos. The following phenomenon shall be avoided: the user keeps doing the preset action as the user does not know whether it has been successfully triggered to take photos, thus causing the smart wearable device keeps detecting its own motion curve and the smart terminal keeps processing the motion curve sent from the smart wearable device, thus resulting in waste of resources of the smart wearable device and the smart terminal.

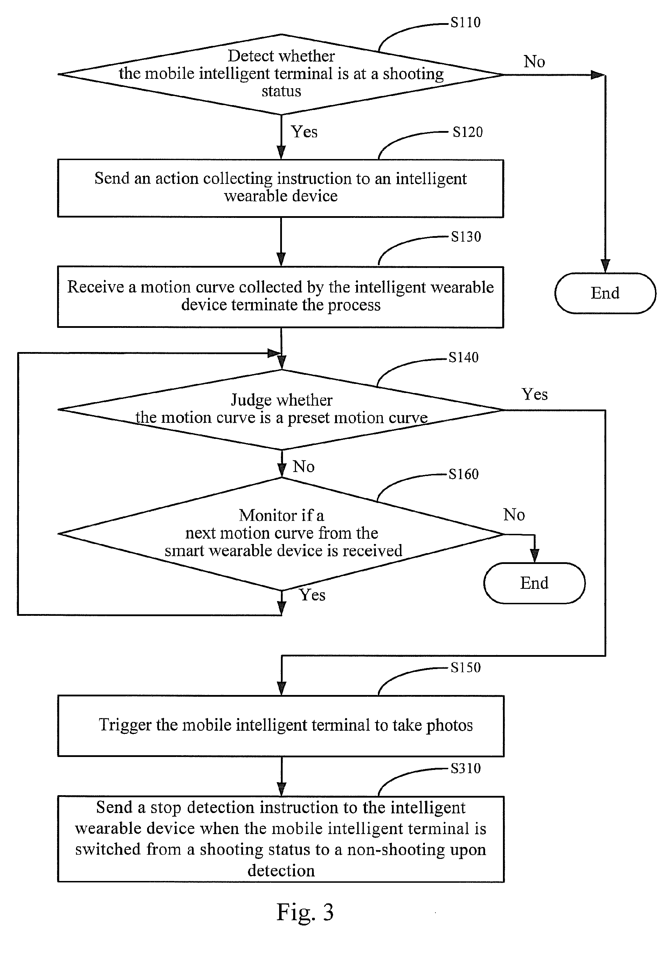

Fig. 3 is a flow chart of a further shooting control method according to an exemplary embodiment. The method is applied to the smart terminal, as shown in Fig. 3, on the basis of the embodiment as shown in Fig. 1, the method may further include following steps.

In Step S310, a stop detection instruction is sent to the smart wearable device when the smart terminal is switched from a shooting status to a non-shooting status upon detection. The stop detection instruction enables the smart wearable device to stop sending the motion curve.

Otherwise, it proceeds to detect whether the smart terminal is switched from a shooting status to a non-shooting status after an interval of a third preset time length.

The third preset time length may be set freely according to the actual need, for example, 40s. After receiving the stop detection instruction sent from the smart mobile phone, the smart wristband will not detect user action any more.

It should be explained that a new embodiment is obtained by adding Step S310 on the basis of the embodiment as shown in Fig. 2.

In the shooting control method provided in the present embodiment, when the smart terminal detects that its own camera app is switched from a shooting status to a non-shooting status, the smart terminal sends a stop detection instruction to the smart wearable device so that the smart wearable device stops collecting and sending its own motion curve to prevent the smart wearable device from keeping detecting user action thus using a lot of resources of the smart wearable device.

Corresponding to the foregoing shooting control method based on the smart terminal, the present invention also provides embodiments of the shooting control method based on the smart terminal and applied to the smart wearable device.

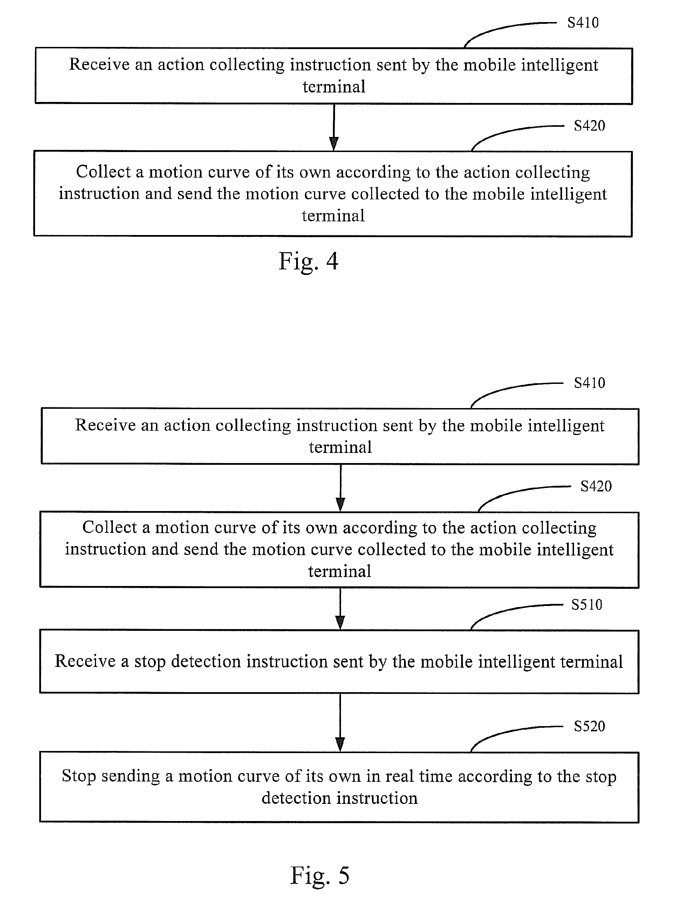

Fig. 4 is a flow chart of a shooting control method according to an exemplary embodiment. The method is executed by a smart wearable device such as a smart wristband, a pair of smart glasses or a smart watch and so on. The embodiments of the present invention are illustrated by taking a smart wristband as an example. As shown in Fig. 4, the method may include the following steps performed by the smart wearable device.

In Step S410, an action collecting instruction sent from the smart terminal is received by the smart wearable device. The action collecting instruction is generated by the smart terminal when the smart terminal detects itself in a shooting status.

The smart terminal may be a smart mobile phone or a tablet computer and the like. The embodiments of the present invention are illustrated by taking a smart mobile phone as an example.

In Step S420, a motion curve of its own is collected by the smart wearable device according to the action collecting instruction and is sent to the smart terminal so as to trigger the smart terminal to take photos if the smart terminal judges that the motion curve is a preset motion curve.

After receiving the action collecting instruction sent from the smart mobile phone, the smart wristband starts collecting the action of the smart wristband wearer and sends the motion curve collected to the smart mobile phone, which judges whether the motion curve is the preset motion curve and triggers the camera app of the smart mobile phone to take photos if the motion curve is the preset motion curve.

In embodiments of the present invention, the step of setting a preset motion curve for triggering the smart terminal to take photos by means of the smart wearable device may include the following steps:
step 11) an action setting instruction sent from the smart terminal is received, the action setting instruction being generated by the smart terminal when the smart terminal detects the operation of a setting action by an operator; and
step 12) the current motion curve of its own is collected according to the action setting instruction and is sent to the smart terminal so that the smart terminal sets the current motion curve as a preset motion curve. The preset trigger motion curve is configured to trigger the smart terminal to take photos.

The shooting control method provided in the present embodiment, can trigger the smart terminal to take photos by means of the smart wearable device. Concretely, the smart terminal triggers the smart wearable device for detection of a user action when it detects itself in a shooting status. The smart wearable device sends the user's motion curve detected to the smart terminal. Afterwards, the smart terminal triggers the camera app to take photos if it detects that the motion curve is a preset motion curve. It can be known from what is mentioned above that the shooting control method may automatically trigger the smart terminal to take photos by detecting a user action with the smart wearable device so that the smart terminal may take photos by remote control, without users manually triggering the shooting button of the smart terminal in the shooting process, simple in operation and convenient for use.

Fig. 5 is a flow chart of another shooting control method according to an exemplary embodiment. The method is applied by the smart wearable device, as shown in Fig. 5, on the basis of the embodiment as shown in Fig. 4, the method may further include the following steps.

In Step S510, a stop detection instruction sent from the smart terminal is received by the smart wearable device. The stop detection instruction is generated by the smart terminal when the smart terminal detects that its camera app is switched from a shooting status to a non-shooting status.

When the smart mobile phone detects itself being switched from a shooting status to a non-shooting status, it sends a stop detection instruction to the smart wristband.

In Step S520, a real-time motion curve of its own is not sent any more according to the stop detection instruction.

After receiving the stop detection instruction, the smart wristband stops detecting the action of the smart wristband wearer and stops sending a motion curve of its own in real time.

In another embodiment of the present invention, the smart wristband starts timing after receiving the action collecting instruction, and automatically stops detecting the motion curve of the smart wearable device if a stop detection instruction sent from the smart terminal is not received within a second preset time length.

In the shooting control method provided in the present embodiment, if the current status meets the condition for stopping detection, the action detection of the smart wearable device wearer is stopped, thus saving processor resources of the smart wearable device and electric energy. The condition of stopping detection includes receiving the stop detection instruction sent from the smart terminal, or, not receiving the stop detection instruction within a second preset time length after receiving the action collecting instruction.

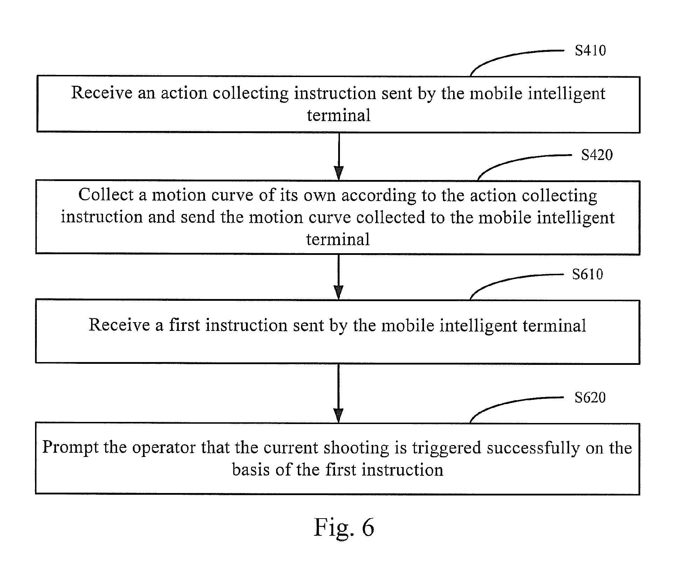

Fig. 6 is a flow chart of a further shooting control method according to an exemplary embodiment. The method is applied by the smart wearable device, as shown in Fig. 6, on the basis of the embodiment as shown in Fig. 4, the method may further include following steps.

In Step S610, a first instruction sent from the smart terminal is received by the smart wearable device. The first instruction is generated by the smart terminal when the smart terminal detects that the motion curve collected by the smart wearable device is a preset motion curve.

In Step S620, the operator is prompted that the current shooting is triggered successfully on the basis of the first instruction.

For example, the smart wristband vibrates after receiving the first instruction from the smart mobile phone. Perceiving the vibration of the smart wristband, the user learns that the smart mobile phone is successfully triggered by using the preset motion curve to take photos.

In the shooting control method provided in the present embodiment, when a first instruction sent from the smart terminal is received, the user is prompted that it is successfully triggered to take photos, thus preventing the user from keeping doing the preset action, preventing the smart wearable device from keeping detecting the user action, and preventing the smart terminal from keeping judging whether the motion curve received is the preset motion curve. In this way, it is possible to further save processor resources of the smart wearable device and electric energy.

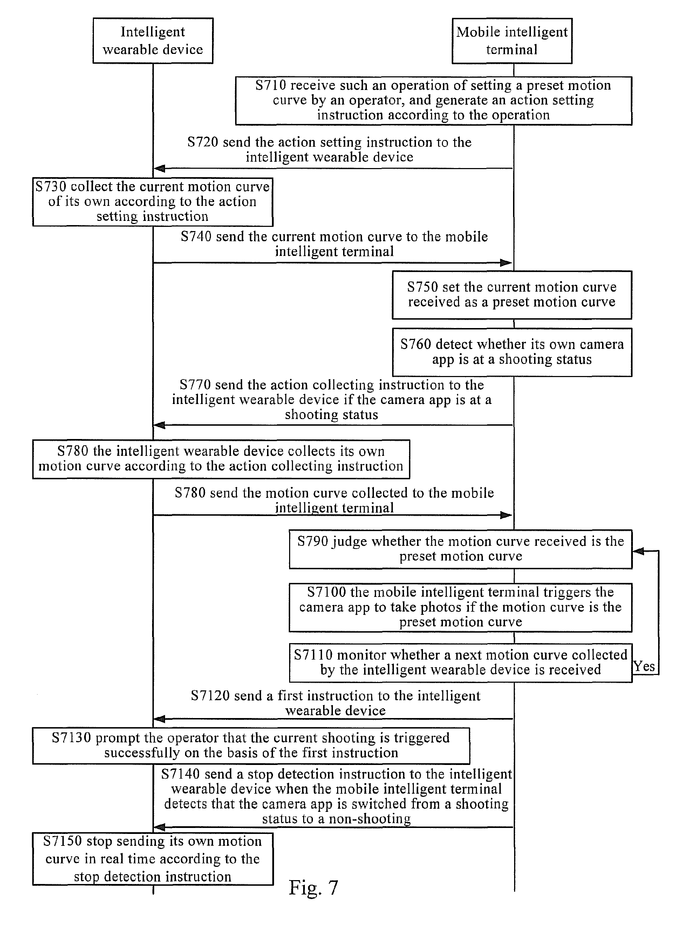

Fig. 7 is a flow chart of a shooting control method according to an exemplary embodiment. The method is applied by a system comprising a smart terminal and a smart wearable device, as shown in Fig. 7, the method includes the following steps.

In Step S710, the smart terminal receives such an operation of setting a preset motion curve by an operator, and generates an action setting instruction according to the operation.

In Step S720, the smart terminal sends the action setting instruction to the smart wearable device.

In Step S730, the smart wearable device collects the current motion curve of its own according to the action setting instruction.

In Step S740, the smart wearable device sends the current motion curve to the smart terminal.

In Step S750, the smart terminal sets the current motion curve as a preset motion curve.

In Step S760, the smart terminal detects whether its own camera app is in a shooting status. It proceeds to Step S770 if the camera app is in a shooting status. The process is terminated if the camera app is in a non-shooting status.

In Step S770, the smart terminal sends the action collecting instruction to the smart wearable device if the camera app is in a shooting status.

In Step S780, the smart wearable device collects its own motion curve according to the action collecting instruction and sends the motion curve collected to the smart terminal.

In Step S790, the smart terminal judges whether the motion curve received is the preset motion curve. It proceeds to Step S7100 if the motion curve received is the preset motion curve. It proceeds to Step S7110 if the motion curve received is not the preset motion curve.

In Step S7100, the smart terminal triggers the camera app to take photos if the motion curve is the preset motion curve. Afterwards, it proceeds to Step S7120.

In Step S7110, the smart terminal monitors whether a next motion curve collected by the smart wearable device is received. If yes, it proceeds to Step S790. Otherwise, the process is terminated.

In Step S7120, the smart terminal sends a first instruction to the smart wearable device.

In Step S7130, the smart wearable device prompts the operator that the current shooting is triggered successfully on the basis of the first instruction.

In Step S7140, the smart terminal sends a stop detection instruction to the smart wearable device when the smart terminal detects that the camera app is switched from a shooting status to a non-shooting status.

In Step S7150, the smart wearable device stops sending its own motion curve in real time according to the stop detection instruction.

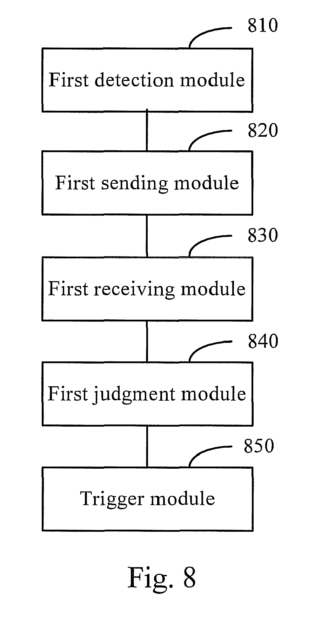

Fig. 8 is a block diagram of a shooting control device according to an exemplary embodiment. The device may be a smart terminal or may be included (i.e. embedded) in a smart terminal such as the smart mobile terminal. As shown in Fig. 8, the device comprises: a first detection module 810, a first sending module 820, a first receiving module 830, a first judgment module 840 and a trigger module 850.

The first detection module 810 is configured to detect whether the smart terminal is in a shooting status.

The first sending module 820 is configured to send an action collecting instruction to the smart wearable device when the first detection module 810 detects that the smart terminal is in a shooting status. The action collecting instruction enables the smart wearable device to collect its own motion curve.

The first receiving module 830 is configured to receive a motion curve collected by the smart wearable device.

The first judgment module 840 is configured to judge whether the motion curve received by the first receiving module 830 is a preset motion curve.

The trigger module 850 is configured to trigger the smart terminal to take photos if the first judgment module 840 judges that the motion curve is a preset motion curve.

In an exemplary embodiment of the present invention, the smart terminal is triggered to take photos if the first judgment module 840 judges that the motion curve is a preset motion curve.

In another exemplary embodiment of the present invention, the trigger module 850 comprises: a first trigger submodule and a second trigger submodule.

The first trigger submodule is configured to trigger the smart terminal to take a single photo when one motion curve of the smart wearable device received within a first preset time length is the preset motion curve.

The second trigger submodule is configured to trigger the smart terminal to take continuous photos when the at least two motion curves received within a first preset time length are the preset motion curves.

In another exemplary embodiment of the present invention, the preset motion curve comprises a first preset motion curve and a second preset motion curve. The trigger module 850 comprises: a third trigger submodule and a fourth trigger submodule.

The third trigger submodule is configured to trigger the smart terminal to take a single photo if the motion curve is the first preset motion curve.

The fourth trigger submodule is configured to trigger the smart terminal to take continuous photos if the motion curve is the second preset motion curve.

The shooting control device provided by the present embodiment may trigger the smart wearable device to collect its own motion curve when the smart terminal detects that its camera app is in a shooting status. The smart wearable device sends the motion curve collected to the smart terminal. Afterwards, the camera app is triggered to take photos if the smart terminal judges that the motion curve is the preset motion curve. It can be known from what is mentioned above that the shooting control device may automatically trigger the smart terminal to take photos by detecting user action by the smart wearable device so that the smart terminal may take photos by remote control, without the user manually triggering the shooting button of the smart terminal in the shooting process, simple in operation and convenient for use.

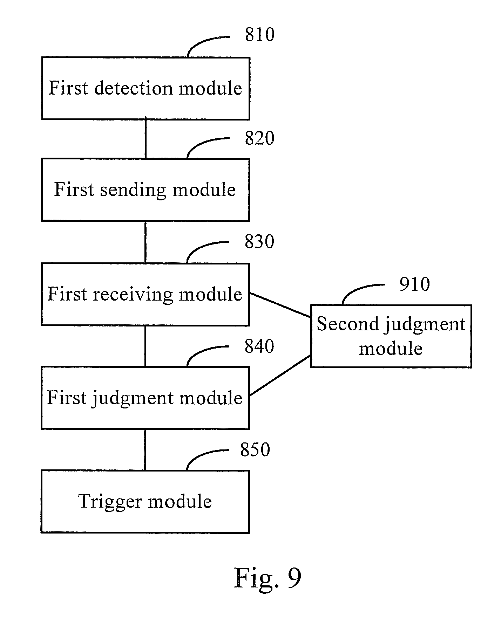

Fig. 9 is a block diagram of another shooting control device according to an exemplary embodiment. The device may be or may be applied to the smart terminal, as shown in Fig. 9, on the basis of the embodiment as shown in Fig. 8; the device may further include a second judgment module 910.

The second judgment module 910 is configured to judge whether a next motion curve sent from the smart wearable device is received if the first judgment module 840 judges that the motion curve is not a preset motion curve, and to enable the first judgment module to judge whether the next motion curve is a preset motion curve if the next motion curve sent from the smart wearable device is received.

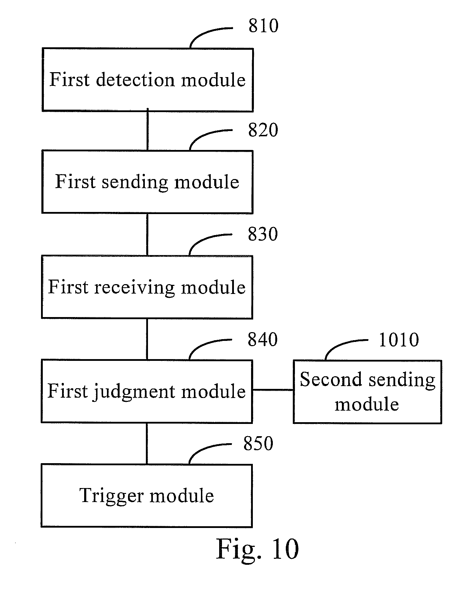

Fig. 10 is a block diagram of a further shooting control device according to an exemplary embodiment. The device may be a smart terminal or may be included (i.e. embedded) in the smart terminal, as shown in Fig. 10, on the basis of the embodiment as shown in Fig. 8. In this embodiment, the device may further include a second sending module 1010.

The second sending module 1010 is configured to send a first instruction to the smart wearable device if the first judgment module 840 judges that the motion curve is a preset motion curve. The first instruction enables the smart wearable device to prompt the operator that the current shooting is triggered successfully.

It should be explained that, on the basis of the embodiment as shown in Fig. 9, a new embodiment may be obtained by adding the second sending module, not repeated any more herein.

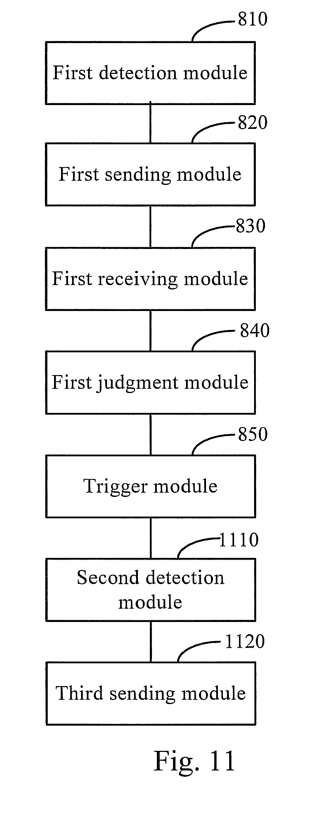

Fig. 11 is a block diagram of still a further shooting control device according to an exemplary embodiment. The device may be a smart terminal or may be included (i.e. embedded) in the smart terminal, on the basis of the embodiment as shown in Fig. 8. In this embodiment, the device may further include a second detection module 1110 and a third sending module 1120.

The second detection module 1110 is configured to detect whether the smart terminal is switched from a shooting status to a non-shooting status.

The third sending module 1120 is configured to send a stop detection instruction to the smart wearable device when the second detection module 1110 detects that the smart terminal is switched from a shooting status to a non-shooting status. The stop detection instruction enables the smart wearable device to stop sending the motion curve in real time.

It should be explained that, on the basis of the embodiment as shown in Fig. 9 or 10, a new embodiment may be obtained by adding the second detection module 1110 and the third sending module 1120, not repeated any more herein.

In the shooting control device provided in the present embodiment, when the smart terminal detects that its own camera app is switched from a shooting status to a non-shooting status, the smart terminal sends a stop detection instruction to the smart wearable device so that the smart wearable device stops detecting the operator's action, thereby preventing the smart wearable device from keeping detecting the operator's action thus using a lot of resources of the smart wearable device.

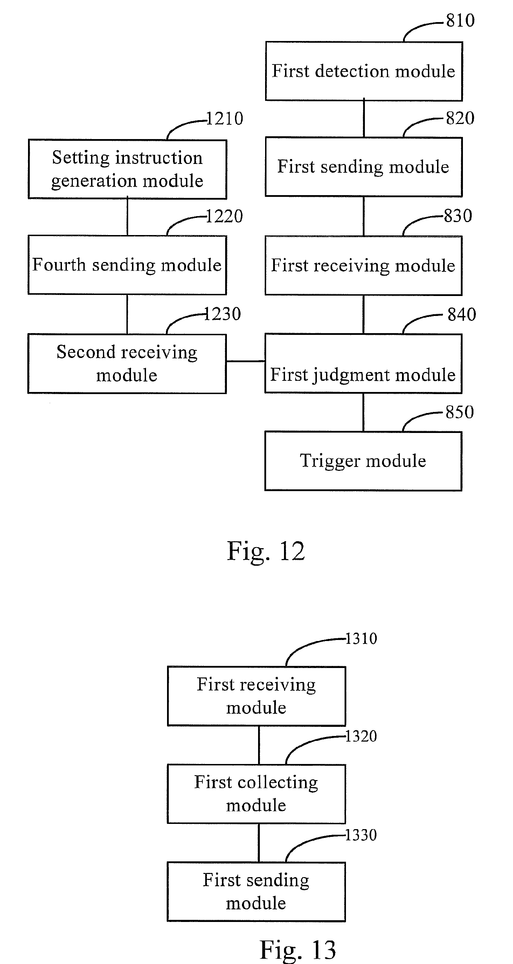

Fig. 12 is a block diagram of still a further shooting control device according to an exemplary embodiment. The device may be a smart terminal or may be included (i.e. embedded) in the smart terminal, on the basis of the embodiment as shown in Fig. 8; the device may further include a setting instruction generation module 1210, a fourth sending module 1220 and a second receiving module 1230.

The setting instruction generation module 1210 is configured to receive such an operation of setting a preset motion curve by the operator, and to generate an action setting instruction according to the operation.

The fourth sending module 1220 is configured to send the action setting instruction generated by the setting instruction generation module 1210 to the smart wearable device so that the smart wearable device detects its own motion curve.

The second receiving module 1230 is configured to receive the current motion curve sent from the smart wearable device and to set the current motion curve as the preset motion curve.

It should be explained that, on the basis of the embodiment as shown in Fig. 9, 10 or 11, a new embodiment may be obtained by adding the setting instruction generation module 1210, the fourth sending module 1220 and the second receiving module 1230, not repeated any more herein.

The present invention also provides embodiments of the shooting control device applied to the smart wearable device.

Fig. 13 is a block diagram of a shooting control device according to an exemplary embodiment. The device may be a smart wearable device or may be included (i.e. embedded) to a smart wearable device. As shown in Fig. 13, the device comprises: a first receiving module 1310, a first collecting module 1320 and a first sending module1330.

The first receiving module 1310 is configured to receive an action collecting instruction sent from the smart terminal. The action collecting instruction is generated by the smart terminal when the smart terminal detects itself in a shooting status.

The first collecting module 1320 is configured to collect a motion curve of its own according to the action collecting instruction received by the first receiving module 1310.

The first sending module 1330 is configured to send the motion curve collected by the first collecting module 1320 to the smart terminal so as to trigger the smart terminal to take photos if the smart terminal judges that the motion curve is a preset motion curve.

The shooting control device provided by the present embodiment may trigger the smart terminal to take photos by means of the smart wearable device. Specifically, the smart terminal triggers the smart wearable device to detect a user action when it detects itself in a shooting status. The smart wearable device sends its own motion curve collected to the smart terminal. Afterwards, the smart terminal triggers the camera app to take photos if it detects that the motion curve is a preset motion curve. It can be known from what is mentioned above that the shooting control device may automatically trigger the smart terminal to take photos by detecting user action with the smart wearable device so that the smart terminal may take photos by remote control, without the user manually triggering the shooting button of the smart terminal in the shooting process, simple in operation and convenient for use.

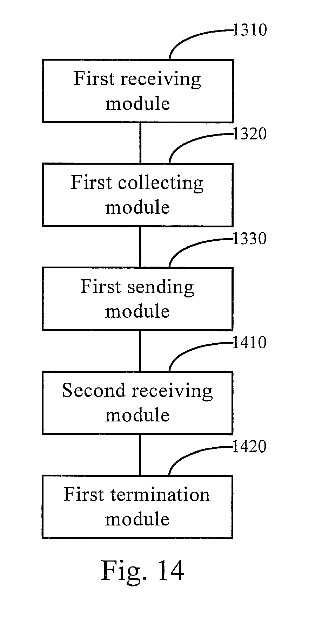

Fig. 14 is a block diagram of another shooting control device according to an exemplary embodiment. The device may be the smart wearable device or may be included (i.e. embedded) in the smart wearable device, as shown in Fig. 14, on the basis of the embodiment as shown in Fig. 13. In this embodiment, the device may further include a second receiving module 1410 and a first termination module 1420.

The second receiving module 1410 is configured to receive a stop detection instruction sent from the smart terminal.

The first termination module 1420 is configured to stop sending a motion curve of its own in real time according to the stop detection instruction received by the second receiving module 1410, wherein, the stop detection instruction is generated by the smart terminal when the smart terminal is switched from a shooting status to a non-shooting status upon detection.

In another exemplary embodiment of the present invention, on the basis of the embodiment as shown in Fig. 13, the shooting control device may further include a second termination module.

The second termination module is configured to stop sending a motion curve of its own in real time if it fails in receiving the stop detection instruction sent from the smart terminal within a second preset time length after receiving the action collecting instruction.

In the shooting control device provided in the present embodiment, if the current status meets the condition for stopping detection, the detection of action of the smart wearable device wearer is stopped, thus saving processor resources of the smart wearable device and electric energy.

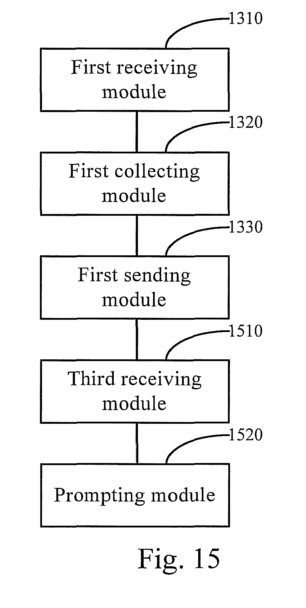

Fig. 15 is a block diagram of a further shooting control device according to an exemplary embodiment. The device may be the smart wearable device or may be included (i.e. embedded) in the smart wearable device, on the basis of the embodiment as shown in Fig. 13. In this embodiment, the device may further include a third receiving module 1510 and a prompting module 1520.

The third receiving module 1510 is configured to receive a first instruction sent from the smart terminal. The first instruction is generated by the smart terminal when the smart terminal detects that the motion curve is a preset motion curve.

The prompting module 1520 is configured to prompt the operator that the current shooting is triggered successfully on the basis of the first instruction received by the third receiving module 1510.

In the shooting control device provided in the present embodiment, when a first instruction sent from the smart terminal is received, the user is prompted that it is successfully triggered to take photos, thus preventing the user from keeping doing the preset action, preventing the smart wearable device from keeping collecting its own motion curve, and preventing the smart terminal from keeping judging whether the motion curve received is the preset motion curve. In this way, it is possible to further save processor resources of the smart wearable device and electric energy.

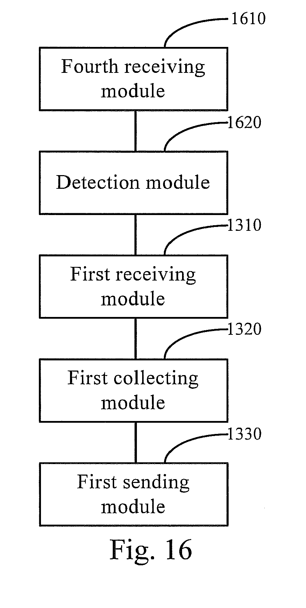

Fig. 16 is a block diagram of still a further shooting control device according to an exemplary embodiment. The device may be a smart wearable device or may be included (i.e. embedded) in the smart wearable device, on the basis of the embodiment as shown in Fig. 13. In this embodiment, the device may further comprise a fourth receiving module 1610 and a detection module 1620.

The fourth receiving module 1610 is configured to receive an action setting instruction sent from the smart terminal. The action setting instruction is generated by the smart terminal when the smart terminal detects an operation of setting an action by the operator.

The detection module 1620 is configured to detect the current motion curve of its own according to the action setting instruction and to send the current motion curve to the smart terminal so that the smart terminal sets the current motion curve as a preset motion curve.

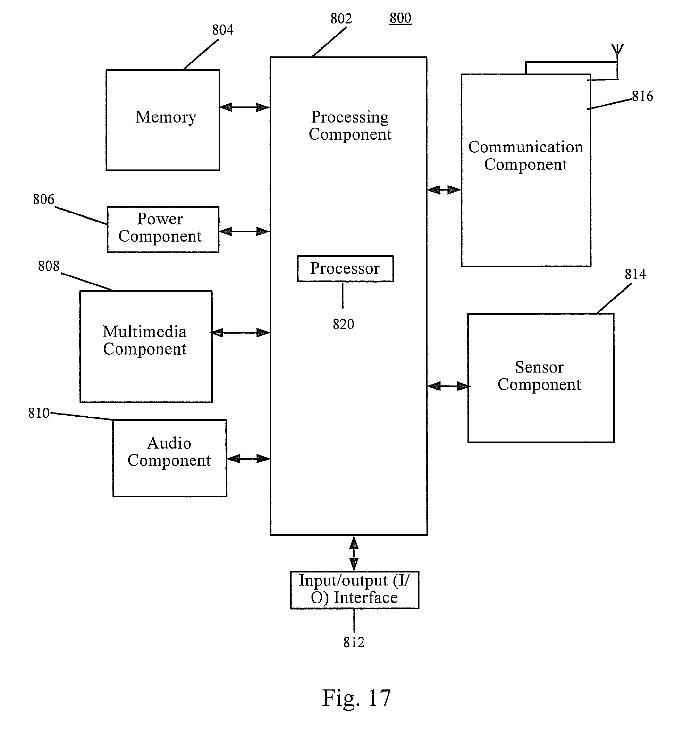

Fig. 17 is a block diagram of a device 800 used for the shooting control method according to an exemplary embodiment. For example, the device 800 may be a smart terminal such as a smart mobile phone or a tablet computer described above, a mobile telephone, a computer, a digital broadcasting terminal, a message transceiver device, a tablet device, a medical device, a fitness facility, a PDA (personal digital assistant) and the like. The device 800 may also be the intelligent wearable device as described above.

Referring to Fig. 17, the device 800 may include one or more components as below: a processor component 802, a memory 804, a power supply component 806, a multimedia component 808, an audio component 810, an input/output (I/O) interface 812, a sensor component 814 and a communication component 816.

The processor component 802 usually controls the overall operation of the device 800, for example, display, telephone call, data communication, and operation associated with camera operation and record operation. The processor component 802 may include one or a plurality of processors 820 for executing instructions so as to complete steps of above method in part or in whole. In addition, the processor component 802 may include one or a plurality of modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include any application program or approach for operation of the device 800, including instructions, contact data, phonebook data, message, picture and video, etc. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the device 800. The power supply component 806 may include a power management system, one or a plurality of power supplies, and other components associated with power generation, management and distribution of the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides an interface for the processor component 802 and peripheral interface modules, the peripheral interface modules may be a keyboard, a click wheel and buttons, etc. These buttons may include but not limited to: home button, volume button, start button and locking button.

The sensor component 814 includes one or more sensors for providing the device 800 with state evaluation from all aspects. For example, the sensor component 814 may detect the on/off state of the device 800, relative positioning of components, for example, the components are the displayer and keypads of the device 800; the sensor component 814 also may detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, for example, WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 800 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, there is also provided a non-transitory computer-readable storage medium including instructions, for example, a memory 804 including instructions, which may be executed by the processors 820 of the device 800 so as to achieve the above methods. For example, the non-transitory computer-readable storage medium may be ROM, random access memory (RAM), CD-ROM, magnetic tape, floppy disk and optical data storage device, etc.

A non-transitory computer-readable storage medium, wherein instructions in the storage medium are executed by the processor of the smart terminal so that the smart terminal may execute a shooting control method, and the method comprises:
detecting whether the smart terminal is in a shooting status;
sending an action collecting instruction to a smart wearable device in case of detecting that the smart terminal is in a shooting status, the action collecting instruction being configured to enable the smart wearable device to collect its own motion curve;
receiving the motion curve collected by the smart wearable device and judging whether the motion curve is a preset motion curve; and
triggering the smart terminal to take photos if the motion curve is a preset motion curve.

The present invention also provides a non-transitory computer-readable storage medium applied to the smart wearable device, instructions in the storage medium are executed by the processor of the smart wearable device so that the smart wearable device may execute a shooting control method, and the method comprises:
receiving an action collecting instruction sent from a smart terminal, the action collecting instruction being generated by the smart terminal when the smart terminal detects itself in a shooting status; and
collecting a motion curve of its own according to the action collecting instruction and sending the motion curve collected to the smart terminal so as to trigger the smart terminal to take photos if the smart terminal judges that the motion curve is a preset motion curve.

## Claims

1. A shooting control method for use in a smart terminal, comprising:
detecting (110) whether the smart terminal is in a shooting status;
sending (120) an action collecting instruction to a smart wearable device in case of detecting that the smart terminal is at the shooting status, the action collecting instruction being configured to enable the smart wearable device to collect its own motion curve;
receiving (130) the motion curve collected by the smart wearable device and judging (140) whether the motion curve is a preset motion curve; and
triggering (150) the smart terminal to take photos if the motion curve is the preset motion curve.

2. The method of claim 1, wherein the method further comprises:
monitoring (160) whether a next motion curve sent from the smart wearable device is received if the motion curve is not the preset motion curve; and
returning to execute the step of judging (140) whether the motion curve is the preset motion curve if the next motion curve sent from the smart wearable device is received.

3. The method of claim 1 or 2, wherein the method further comprises:
sending (210) a first instruction to the smart wearable device if the motion curve is the preset motion curve, the first instruction being configured to enable the smart wearable device to prompt the operator that the current shooting is triggered successfully.

4. The method according to any of claims 1 to 3, wherein the method further comprises:
sending (310) a stop detection instruction to the smart wearable device when the smart terminal is switched from a shooting status to a non-shooting status upon detection, the stop detection instruction being configured to enable the smart wearable device to stop sending the motion curve in real time.

5. The method according to any of claims 1 to 4, wherein the step of triggering (150) the smart terminal to take photos if the motion curve is a preset motion curve comprises:
triggering the smart terminal to take a single photo when one motion curve of the smart wearable device received within a first preset time length is the preset motion curve, and triggering the smart terminal to take continuous photos when each of at least two motion curves of the smart wearable device received within a first preset time length is the preset motion curve;
or,
in case that the preset motion curve comprises a first preset motion curve and a second preset motion curve, triggering the smart terminal to take a single photo if the motion curve is the first preset motion curve, and triggering the smart terminal to take continuous photos if the motion curve is the second preset motion curve.

6. The method according to any of claims 1 to 5, wherein the method further comprises:
receiving an operation of setting a preset motion curve from an operator, and generating an action setting instruction according to the operation;
sending the action setting instruction to the smart wearable device so that the smart wearable device collects a current motion curve of its own; and
receiving the current motion curve collected by the smart wearable device and setting the current motion curve as the preset motion curve, the preset motion curve being configured to trigger the smart terminal to take photos.

7. A shooting control method for use in a smart wearable device, comprising:
receiving (410) an action collecting instruction sent from a smart terminal, the action collecting instruction being generated when the smart terminal detects itself in a shooting status; and
collecting (420) a motion curve of the smart wearable device itself according to the action collecting instruction and sending the motion curve collected to the smart terminal so as to trigger the smart terminal to take photos if the smart terminal judges the motion curve is a preset motion curve.

8. The method of claim 7, wherein the method further comprises:
receiving (510) a stop detection instruction sent from the smart terminal and stopping (520) sending a motion curve of the smart wearable device itself in real time according to the stop detection instruction, wherein, the stop detection instruction being generated by the smart terminal when the smart terminal detects itself switched from a shooting status to a non-shooting status;
or,
stopping sending a motion curve of the smart wearable device itself in real time if the stop detection instruction sent from the smart terminal is not received within a second preset time length after receiving the action collecting instruction.

9. The method of claim 7 or 8, wherein the method further comprises:
receiving (610) a first instruction sent from the smart terminal and prompting (620) the operator that the current shooting is successfully triggered on the basis of the first instruction, the first instruction being generated when the smart terminal detects that the motion curve is the preset motion curve.

10. The method according to any of claims 7 to 9, wherein the method further comprises:
receiving an action setting instruction sent from the smart terminal, the action setting instruction being generated by the smart terminal when the smart terminal detects an operation of setting action by an operator; and
detecting a current motion curve of the smart wearable device itself according to the action setting instruction and sending the current motion curve to the smart terminal so that the smart terminal sets the current motion curve as the preset motion curve.

11. A shooting control device, comprising:
a first detection module (810), configured to detect whether a smart terminal is in a shooting status;
a first sending module (820), configured to send an action collecting instruction to a smart wearable device if the smart terminal is at the shooting status, the action collecting instruction being configured to enable the smart wearable device to collect its own motion curve;
a first receiving module (830), configured to receive a motion curve collected by the smart wearable device;
a first judgment module (840), configured to judge whether the motion curve is a preset motion curve; and
a trigger module (850), configured to trigger the smart terminal to take photos if the motion curve is the preset motion curve.

12. The device of claim 11, wherein the device further comprises:
a second judgment module (910), configured to monitor whether a next motion curve sent from the smart wearable device is received if the motion curve is not the preset motion curve, and to enable the first judgment module to judge whether the next motion curve is the preset motion curve if the next motion curve sent from the smart wearable device is received; and/or
a second sending module (1010), configured to send a first instruction to the smart wearable device if the motion curve is the preset motion curve, the first instruction being configured to enable the smart wearable device to prompt the operator that the current shooting is triggered successfully; and/or
a second detection module (1110) configured to detect whether the smart terminal is switched from a shooting status to a non-shooting status, and a third sending module (1120) configured to send a stop detection instruction to the smart wearable device when the smart terminal is switched from a shooting status to a non-shooting status upon detection, the stop detection instruction being configured to enable the smart wearable device to stop sending the motion curve in real time; and/or
a setting instruction generation module (1210) configured to receive an operation of setting a preset motion curve from an operator and to generate an action setting instruction according to the operation, a fourth sending module (1220) configured to send the action setting instruction to the smart wearable device so that the smart wearable device detects a current motion curve of its own, and a second receiving module (1230) configured to receive the current motion curve sent from the smart wearable device and to set the current motion curve as the preset motion curve; and/or
the trigger module (850) comprises:
a first trigger submodule configured to trigger the smart terminal to take a single photo if one motion curve of the smart wearable device received within a first preset time length is the preset motion curve, and a second trigger submodule configured to trigger the smart terminal to take continuous photos when each of at least two motion curves of the smart wearable device received within a first preset time length is the preset motion curve; or
in case that the preset motion curve comprises a first preset motion curve and a second preset motion curve, a third trigger submodule configured to trigger the smart terminal to take a single photo when the motion curve is the first preset motion curve, and a fourth trigger submodule configured to trigger the smart terminal to take continuous photos when the motion curve is the second preset motion curve.

13. A shooting control device for use in a smart wearable device, comprising:
a first receiving module (1310), configured to receive an action collecting instruction sent from a smart terminal, the action collecting instruction being generated by the smart terminal when the smart terminal detects itself in a shooting status;
a first collecting module (1320), configured to collect a motion curve of the smart wearable device itself according to the action collecting instruction; and
a first sending module (1330), configured to send the motion curve to the smart terminal so as to trigger the smart terminal to take photos if the smart terminal judges that the motion curve is a preset motion curve.

14. The device of claim 13, wherein the device further comprises:
a second receiving module (1410), configured to receive a stop detection instruction sent from the smart terminal;
a first termination module (1420), configured to stop sending a motion curve of the smart wearable device itself in real time according to the stop detection instruction, wherein, the stop detection instruction being generated by the smart terminal when the smart terminal detects itself switched from a shooting status to a non-shooting status;
or,
a second termination module, configured to stop sending a motion curve of the smart wearable device itself in real time if the stop detection instruction sent from the smart terminal is not received within a second preset time length after receiving the action collecting instruction.

15. A computer program product stored on a computer usable medium, comprising computer-readable program means for causing a smart terminal to implement a method according to any one of claims 1 to 6 or for causing a smart wearable device to implement a method according to any one of claims 7 to 10.
